# EUROPEAN PATENT APPLICATION

(11) **EP 4 597 781 A1**
(43) Date of publication of application: **06.08.2025**
(21) Application number: 22960814.6
(22) Date of filing: 27.09.2022
(51) Int. Cl.: H02J 3/36, H02H 9/08

(54) **ELECTRIC POWER CONVERSION SYSTEM**

(71) Applicant: MITSUBISHI ELECTRIC CORPORATION, Chiyoda-ku Tokyo 100-8310 (JP)
(72) Inventor: PAGE, Frederick, Tokyo 100-8310 (JP); TAHATA, Kazuyori, Tokyo 100-8310 (JP); UDA, Ryosuke, Tokyo 100-8310 (JP)
(74) Representative: Witte, Weller & Partner Patentanwälte mbB
(86) International application number: PCT/JP2022/035929
(87) International publication number: WO 2024/069750

(57) **Abstract**

A self-commutated power converter (2) performs power conversion between a three-phase alternating-current system (12) and a direct-current system (14). A transformer (13) includes a primary side connected to the alternating-current system (12) and a secondary side connected to the self-commutated power converter (2), the secondary side being Y-connected. An impedance switching circuit (50) is electrically connected between a neutral point (62) on the secondary side of the transformer (13) and a ground. When a single-line-to-ground fault occurs on three phase alternating-current lines (64) connecting the transformer (13) and the self-commutated power converter (2), the impedance switching circuit (50) is configured to have a reduced impedance, as compared to when the single-line-to-ground fault does not occur.

## Description

### TECHNICAL FIELD

The present disclosure relates to an electric power conversion system.

### BACKGROUND ART

A modular multilevel converter (hereinafter, also referred to as a MMC converter), in which multiple unit converters are cascade-connected, can readily cope with a higher voltage by increasing the number of unit converters. The "unit converter" is also referred to as a "sub module" or "converter cell." The MMC converter is widely applied to transmission and distribution grids, as a large-capacity static VAR compensator or as a power conversion device for high-voltage direct-current (DC) power transmission.

WO2021/024455 (PTL 1) discloses an electric power conversion system including: a self-commutated power converter for converting power between a DC system and an alternating-current (AC) system; and a transformer connected between the self-commutated power converter and the AC system, wherein the neutral point of the transformer is grounded via an impedance circuit that has a low impedance in terms of direct current and a high impedance in terms of alternating current.

### CITATION LIST

### PATENT LITERATURE

PTL 1: WO2021/024455

### SUMMARY OF INVENTION

### TECHNICAL PROBLEM

PTL 1 allows reduction of a fault current at the occurrence of a ground fault at the DC system or AC system by effectively grounding the neutral point of the transformer with low impedance for direct current and causing the neutral point to have a high impedance in terms of alternating current. Furthermore, even if the third-order harmonics, to be superimposed on the output voltage in order to improve the output voltage utilization, is applied to the neutral point of the transformer, the current flowing into the ground can be reduced by arranging an impedance circuit having a high impedance in terms of alternating current.

However, in a three-phase AC system, upon occurrence of a single line to ground (1LG) fault where only one phase is grounded on the converter side of the transformer, voltages of the remaining two phases (sound phases) rise. On this occasion, in the electric power conversion system of PTL 1, there is a concern that the voltage of a DC capacitor in a converter cell increases unduly and results in failure of the DC capacitor due to the power charging at the sound phases as a function of the voltage rise.

As an alternative, by placing a lightning arrestor on each power transmission line of the DC or AC system, the rise of the voltages of the sound phases in the event of a 1LG fault can be prevented and therefore the DC capacitor in the converter cell can be prevented from experiencing overvoltage. However, in this case, for example, considering the clearance of the fault by a circuit breaker, the lightning arrestor needs to continue to operate for several tens of milliseconds after the occurrence of the 1LG fault until the fault is cleared. Due to this, the processing energy of the lightning arrestor greatly increases, and the placement of the lightning arrestor having such characteristics may results in increased size and cost of the system.

The present disclosure is made to solve such a problem, and an object of the present disclosure is to inhibit the rise of the voltages of the sound phases in the event of a single line to ground (1LG) fault on the power converter side of the transformer connected between the AC system and the self-commutated power converter.

### SOLUTION TO PROBLEM

According to a certain aspect of the present disclosure, an electric power conversion system is provided. The electric power conversion system includes a self-commutated power converter, a first transformer, and an impedance switching circuit. The self-commutated power converter performs power conversion between a three-phase alternating-current system and a direct-current system. The first transformer has a primary side connected to the alternating-current system and a secondary side connected to the self-commutated power converter, the secondary side being Y-connected. An impedance switching circuit is electrically connected between a neutral point of the Y-connection of the first transformer and a ground. When a single-line-to-ground fault occurs on three phase alternating-current lines connecting the first transformer and the self-commutated power converter, the impedance switching circuit is configured to have a reduced impedance, as compared to when the single-line-to-ground fault does not occur.

### ADVANTAGEOUS EFFECTS OF INVENTION

According to the present disclosure, in the event of a single-line-to-ground fault on the power converter side of the transformer connected between the AC system and the self-commutated power converter, the rise of the voltages of the sound phases can be inhibited by allowing a fault current to flow from the neutral point to the ground via an inductance switching circuit having a reduced impedance.

### BRIEF DESCRIPTION OF DRAWINGS

Fig. 1 is a schematic configuration diagram of an electric power conversion system according to the present embodiment.
Fig. 2 is a schematic configuration diagram of a power conversion device configured with an MMC conversion scheme.
Fig. 3 is a circuit diagram showing an example configuration of a sub module of Fig. 2.
Fig. 4 is a schematic waveform diagram illustrating behaviors of voltages on an AC line in the event of a 1LG fault.
Fig. 5 is a schematic waveform diagram illustrating a behavior of a voltage on a DC line in the event of a 1LG fault.
Fig. 6 is a schematic waveform diagram illustrating a behavior of a voltage in a DC capacitor in a sub module in the event of a 1LG fault.
Fig. 7 is a circuit diagram illustrating a configuration of an impedance switching circuit according to Embodiment 1.
Fig. 8 is a schematic diagram illustrating characteristics of an impedance switching circuit of Fig. 7.
Fig. 9 is a circuit diagram illustrating a configuration of an impedance switching circuit according to Embodiment 2.
Fig. 10 is a circuit diagram schematically illustrating voltages applied to DC capacitors.
Fig. 11 is a simplified equivalent circuit diagram of a respective arm of the power converter in the event of a 1LG fault.
Fig. 12 is a circuit diagram illustrating a configuration of an impedance switching circuit according to Embodiment 3.
Fig. 13 is a circuit diagram illustrating a configuration of an impedance switching circuit according to Embodiment 4.
Fig. 14 is a schematic diagram illustrating characteristics of a lightning arrestor of Fig. 13.
Fig. 15 is a circuit diagram illustrating a configuration of an impedance switching circuit according to Embodiment 5.
Fig. 16 is a circuit diagram illustrating a configuration of an impedance switching circuit according to Embodiment 6.
Fig. 17 is a schematic configuration diagram of an electric power conversion system according to Embodiment 7.
Fig. 18 is a schematic diagram illustrating frequency characteristics of a filter circuit of Fig. 17.

### DESCRIPTION OF EMBODIMENTS

Hereinafter, embodiments according to the present disclosure will be described in detail, with reference to the accompanying drawings. Note that, in the following, like reference sign is used to refer to like or corresponding parts, and the description thereof will, in principle, not be repeated.

### Embodiment 1.

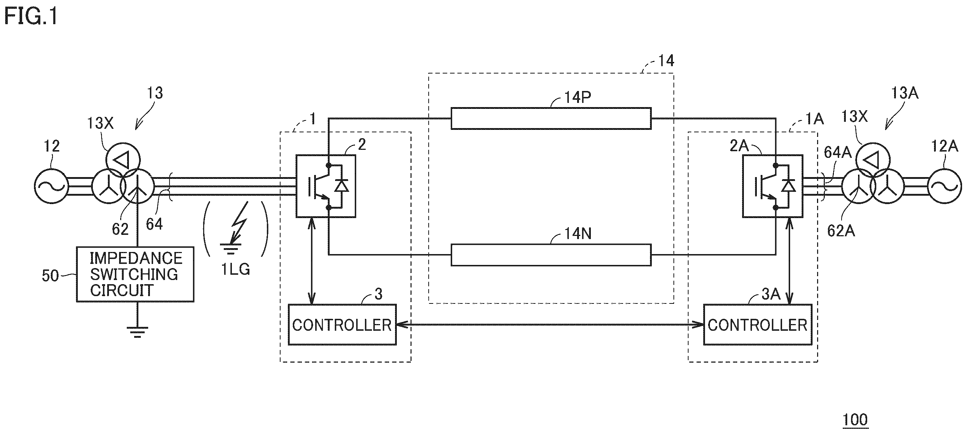

Fig. 1 is a schematic configuration diagram of an electric power conversion system 100 of the present embodiment.

Referring to Fig. 1, electric power conversion system 100 is a system for controlling the electric power of a direct-current (DC) power transmission system of a unipolar configuration. Electric power is transmitted/received between two alternating-current (AC) systems 12 and 12A via a positive-side DC transmission line 14P and a negative-side DC transmission line 14N constituting a DC system 14. AC systems 12 and 12A are three-phase AC systems. For example, DC system 14 is a DC transmission line having a capacitance and may be configured of a cable, for example.

In Fig. 1, if electric power conversion system 100 corresponds to a high voltage direct current (HVDC) system, DC transmission lines 14P and 14N have lengths of tens of kilometers through hundreds of kilometers, for example. If electric power conversion system 100 corresponds to a back-to-back (BTB) system, DC transmission lines 14P and 14N have lengths of a few meters to tens of meters, for example. Note that Fig. 1 shows a DC power system that has two terminals.

A power conversion device 1 includes a self-commutated power converter 2 which converts electric power between DC system 14 and an AC system 12, and a controller 3. Typically, power converter 2 is configured of a modular multilevel converter (MMC) power converter. However, power converter 2 may be of any conversion type, other than the MMC. Power converter 2 is connected to DC transmission lines 14P and 14N. Power converter 2 is also connected to AC system 12 via a transformer 13. Power converter 2 and transformer 13 are connected to each other via AC lines 64.

A power conversion device 1A includes a self-commutated power converter 2A and a controller 3A. The power converter 2A is connected to power converter 2 via DC transmission lines 14P and 14N. Power converter 2A is connected to AC system 12A via transformer 13A. Power converter 2A and transformer 13A are connected to each other via AC lines 64A. Power conversion device 1A has the same configuration as the power conversion device 1.

Controller 3 controls the operation of power converter 2. Controller 3A controls the operation of power converter 2A. Furthermore, controller 3 and controller 3A are configured to communicate with each other. Controllers 3 and 3A control the operations of power converters 2 and 2A, respectively, based on current values and voltage values input from power converters 2 and 2A. Controllers 3 and 3A, typically, include an auxiliary transformer, an analog-to-digital (AD) converter unit, a computing unit, etc., as a hardware configuration. The computing unit includes a central processing unit (CPU), a random access memory (RAM), and a read only memory (ROM). The AD converter unit includes an analog filter, a sample and hold circuit, a multiplexer, etc. Controller 3 is configured of a digital protection and control device, for example.

When electric power is transmitted from AC system 12A to AC system 12, power converter 2A operates as a rectifier (REC) and power converter 2 operates as an inverter (INV). Specifically, power converter 2A converts AC power into DC power, which is DC-transmitted via DC transmission lines 14P and 14N. At the receiving end, power converter 2 converts the DC power into AC power, which is supplied to AC system 12 via transformer 13. When power converter 2A operates as an inverter and power converter 2 operates as a rectifier, the inverse of the above conversion operation is performed.

Transformer 13 is connected between AC system 12 and power converter 2. Specifically, AC system 12 is connected to the primary side of transformer 13 and power converter 2 is connected to the secondary side of transformer 13. For example, transformer 13 is a three-phase transformer of Y-Y connection. Transformer 13 has a Y-connected primary winding and a Y-connected secondary winding, and a neutral point 62 of the secondary winding is grounded via an impedance switching circuit 50. In other words, impedance switching circuit 50 is electrically connected between neutral point 62 on the secondary side of transformer 13 and the ground. Transformer 13 corresponds to one example of a "first transformer". Note that a configuration of impedance switching circuit 50 will be described in detail below.

Transformer 13A is connected between AC system 12A and power converter 2A. Specifically, AC system 12A is connected to the primary side of transformer 13A and power converter 2A is connected to the secondary side of transformer 13A. For example, transformer 13A is a three-phase transformer of Y-Y connection. A winding 13X for extracting a control power source may be disposed on transformers 13 and 13A.

Impedance switching circuit 50 can be disposed at a neutral point 62A on the secondary side of transformer 13A, instead of neutral point 62 on the secondary side of transformer 13. Alternatively, impedance switching circuit 50 may be disposed at neutral point 62 on the secondary side of transformer 13 and neutral point 62A on the secondary side of transformer 13A.

### <Configuration of Power Conversion Device>

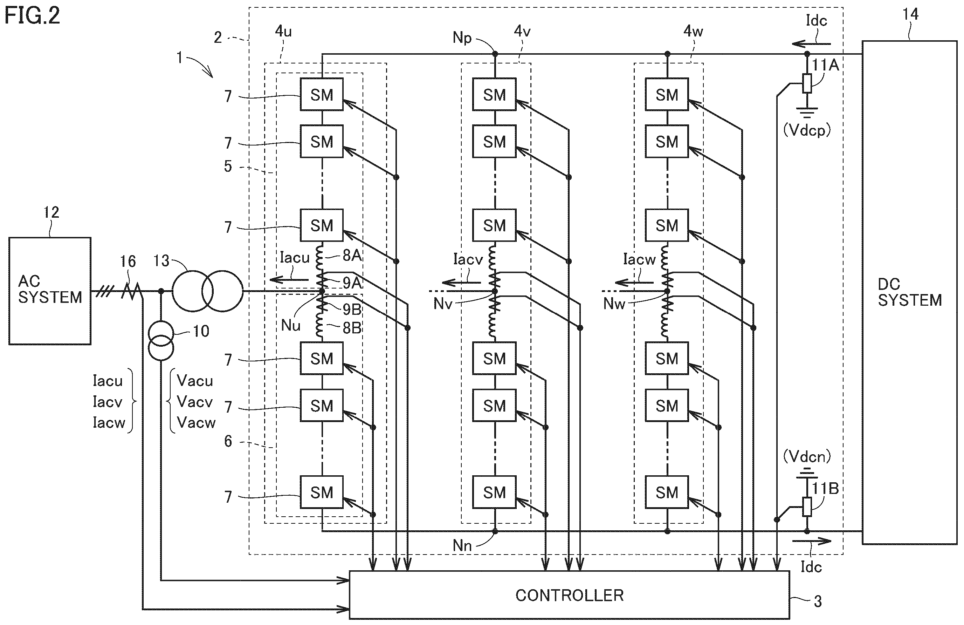

Next, using Fig. 2, an example configuration is described where power conversion device 1 is configured with an MMC conversion scheme. Referring to Fig. 2, power converter 2 is configured of a MMC converter including multiple sub modules 7 (each corresponding to "SM" of Fig. 2) connected in series.

Power converter 2 includes leg circuits 4u, 4v, and 4w (hereinafter, described as a "leg circuit 4" when referring collectively or referring to any leg circuit) which are connected in parallel between a positive DC terminal (i.e., a high-potential-side DC terminal) Np and a negative DC terminal (i.e., a low-potential-side DC terminal) Nn.

Leg circuit 4 is provided for each of the AC phases. Leg circuit 4 is connected between AC power system 12 and DC system 14, and converts power therebetween. Power converter 2 includes three leg circuits 4u, 4v, and 4w in correspondence with a U phase, a V phase, and a W phase, respectively, of AC power system 12.

Leg circuits 4u, 4v, and 4w include AC input terminals Nu, Nv, and Nw, respectively, which are connected to AC power system 12 via transformer 13. In Fig. 2, for ease of illustration, the connections between AC input terminal Nv and transformer 13 and between AC input terminal Nw and transformer 13 are not shown. High-potential-side DC terminal Np and low-potential-side DC terminal Nn, which are commonly connected to each leg circuit 4, are connected to DC system 14 (i.e., DC transmission lines 14P and 14N of Fig. 1).

Leg circuit 4u includes an upper arm 5 extending from high-potential-side DC terminal Np to AC input terminal Nu and a lower arm 6 extending from low-potential-side DC terminal Nn to AC input terminal Nu. AC input terminal Nu, which is a point of connection between upper arm 5 and lower arm 6, is connected to transformer 13. Since leg circuits 4v and 4w have the same configuration as the leg circuit 4u, leg circuit 4u will be representatively described below.

Upper arm 5 includes cascade-connected sub modules 7, and a reactor 8A. Sub modules 7 and reactor 8A are connected in series. Lower arm 6 includes cascade-connected sub modules 7, and a reactor 8B. Sub modules 7 and reactor 8B are connected in series.

Power conversion device 1 includes an AC-voltage detector 10, an AC-current detector 16, DC-voltage detectors 11A and 11B, and arm-current detectors 9A and 9B included in each leg circuit 4, as detectors for measuring the electrical quantities (e.g., current, voltage, etc.) which are used for a control. Signals are detected by these detectors and input to control device 3.

For ease of illustration, Fig. 1 collectively illustrates some of signal lines for signals that are input from the respective detectors to control device 3 and signal lines for signals that are input/output from/to control device 3 to/from respective sub modules 7. In practice, however, the signal line is provided for each detector and each sub module 7. Separate signal lines may be provided for transmission and receipt of signals between each sub module 7 and control device 3. The signal line is configured of an optical fiber, for example.

AC voltage detector 10 detects a U-phase AC voltage Vacu, a V-phase AC voltage Vacv, and a W-phase AC voltage Vacw of AC system 12. AC current detector 16 detects a U-phase AC current Iacu, a V-phase AC current Iacv, and a W-phase AC current Iacw of AC system 12. DC voltage detector 11A detects a DC voltage Vdcp of high-potential-side DC terminal Np connected to DC system 14. DC voltage detector 11B detects a DC voltage Vdcn of low-potential-side DC terminal Nn connected to DC system 14. The difference between DC voltage Vdcp and DC voltage Vdcn will be referred to as a DC voltage Vdc.

Arm current detectors 9A and 9B included in U-phase leg circuit 4u detect an upper-arm current Ipu flowing through upper arm 5 and a lower-arm current Inu flowing through lower arm 6, respectively. Similarly, arm current detectors 9A and 9B included in a V-phase leg circuit 4v detect an upper-arm current Ipv and a lower-arm current Inv, respectively. Arm current detectors 9A and 9B included in a W-phase leg circuit 4w detect an upper-arm current Ipw and a lower-arm current Inw, respectively.

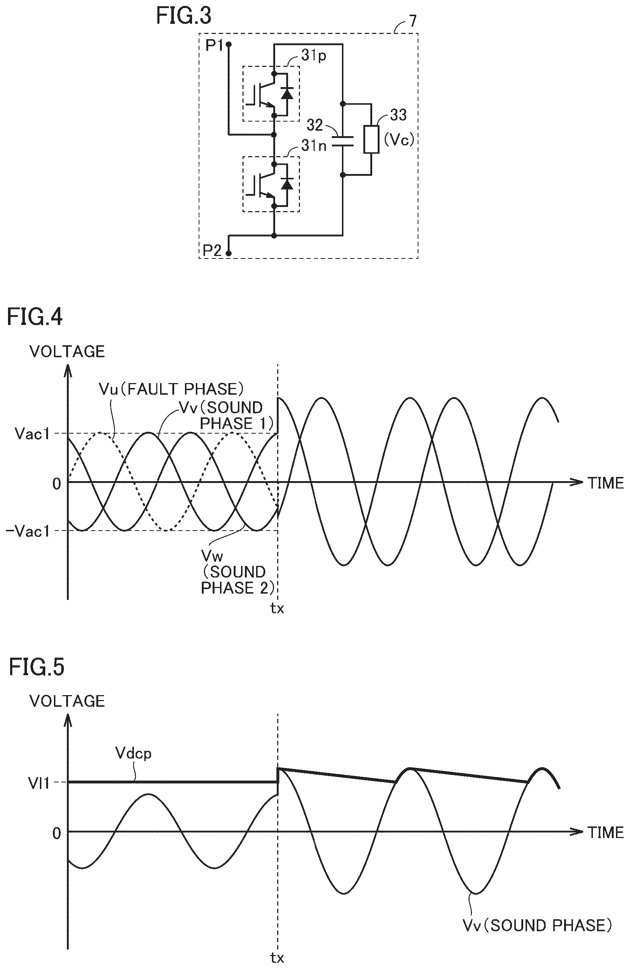

Fig. 3 is a circuit diagram showing one example of a sub module constituting each leg circuit of Fig. 2. Specifically, sub module 7 of Fig. 3 has a circuit structure, called a half-bridge configuration. This sub module 7 includes a series body formed of two switching elements 31p and 31n being connected in series; a power storage element 32; and a voltage detector 33. The series body and power storage element 32 are connected in parallel. Voltage detector 33 detects the voltage across power storage element 32.

The opposing terminals of switching element 31n are referred to as input/output terminals P1 and P2. The voltage across power storage element 32 and zero voltage are output by switching operations of switching elements 31p and 31n. For example, the voltage across power storage element 32 is output when switching element 31p is on and switching element 31n is off. Zero voltage is output when switching element 31p is off and switching element 31n is on. While Fig. 3 illustrates input/output terminals P1 and P2 as the opposing terminals of switching element 31n, the opposing terminals of switching element 31p may be input/output terminals P1 and P2, and in this case, the operation is inverted.

Switching elements 31p and 31n are configured of, for example, a freewheeling diode (FWD) being connected in anti-parallel to a self-arc-extinguishing semiconductor switching element such as an insulated gate bipolar transistor (IGBT), a gate commutated turn-off (GCT) thyristor, or a metal oxide semiconductor field-effect transistor (MOSFET). For example, a film capacitor is mainly used for power storage element 32. Thus, in the following, power storage element 32 will also be referred to as a DC capacitor 32.

The above-described configuration of sub module 7 is by way of example, and sub module 7 having another configuration may be applied to the present embodiment. For example, sub-module 7 may be configured using a full-bridge converter circuit.

### <Phenomenon upon Occurrence of 1LG Fault>

Next, a description is given with respect to the behaviors of voltages upon occurrence of a single-line-to-ground (1LG) fault on three phase AC lines 64 in a configuration of no impedance switching circuit 50 deployed in electric power conversion system 100 of Fig. 1.

Fig. 4 is a schematic waveform diagram illustrating behaviors of voltages on AC lines 64 upon occurrence of a 1LG fault.

As shown in Fig. 4, prior to time tx at which a 1LG fault occurs (in normal operation), voltages Vu, Vv, and Vw of the respective phases of three phase AC lines 64 are sinusoidal voltages having a system frequency (a commercial frequency. For example, 50[Hz] or 60[Hz]) in which the phases differ by 120 degrees at an amplitude Vac1.

At time tx, if a ground fault occurs, for example, at the U phase, U-phase voltage Vu, which is a fault phase, is zero. In contrast, V-phase voltage Vv and W-phase voltage Vw, which are the remaining sound phases (1 and 2) at which no fault occurs, are sinusoidal voltages having amplitudes raised higher than Vac1.

Since a neutral voltage Vn applied to neutral point 62 is Vu + Vv + Vw, Vn is equal to zero prior to time tx. If a 1LG fault occurs (after time t1), in contrast, it can be understood that an AC voltage occurs at neutral-point voltage Vn.

Note that the power converter 2 used in a three-phase AC system may employ a control of superimposing the third-order harmonics on the output voltage in order to increase the output voltage utilization by cancelling the third-order harmonics component of a line voltage, as described in PTL 1. In this case, the third-order harmonics is applied to the neutral point of transformer 13 also in normal operation and the AC voltage appears in neutral-point voltage Vn. However, as compared to neutral-point voltage Vn that is caused by the third-order harmonics in normal operation, neutral-point voltage Vn in the event of a 1LG fault has a significantly increased amplitude.

Fig. 5 shows a behavior of a voltage on DC transmission line 14P as a function of the rise of the voltages of the sound phases (in the event of a 1LG fault) of Fig. 4.

As shown in Fig. 5, in normal operation (prior to time tx), DC voltage Vdcp of DC transmission line 14P is controlled by power converter 2 to a DC voltage Vl1 having a higher amplitude than the three-phase AC voltage.

In the event of the 1LG fault at time tx, as the voltage of the sound phase (e.g., V phase) rises, the amplitude of the AC voltage (e.g., Vv) increases to be higher than voltage Vl1 of DC transmission line 14P of the normal operation, as described with respect to Fig. 4, and DC transmission line 14P is charged with the AC voltage of the sound phase. This raises DC voltage Vdcp higher than voltage Vl1 of the normal operation.

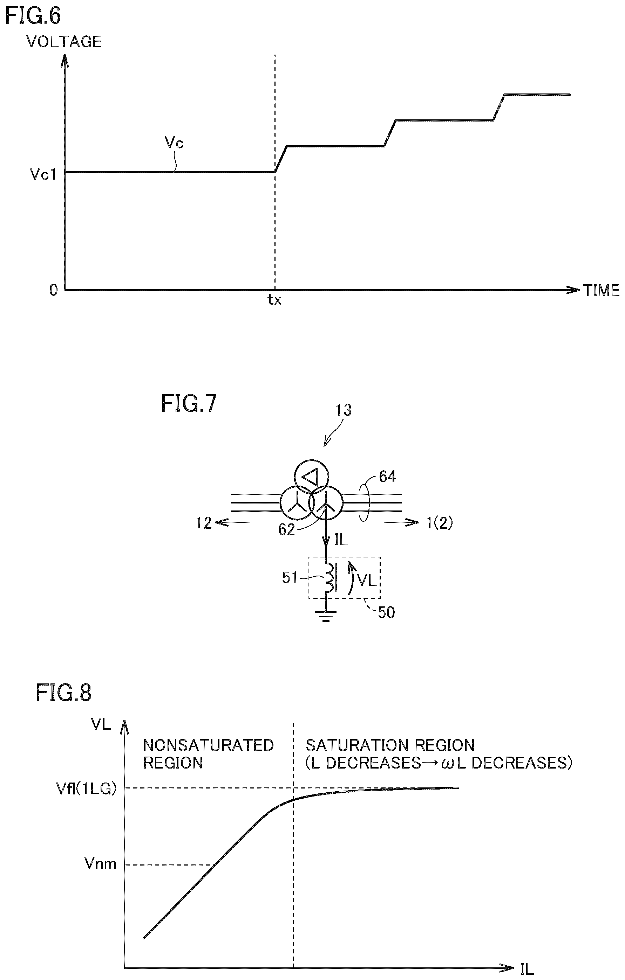

Fig. 6 shows a schematic waveform diagram illustrating a behavior of a voltage in a DC capacitor within a sub module in the event of a 1LG fault.

After time tx, due to the rise of DC voltage Vdcp described with respect to Fig. 5, the voltage applied to each one of sub modules 7 of Fig. 2 is raised higher than before time tx (in normal operation). As a result, in the configuration of sub module 7 shown in Fig. 3, the voltage applied between input/output terminals P1 and P2 is higher than the voltage of DC capacitor 32. In response to this, in Fig. 3, a charging path is formed, for DC capacitor 32, passing through input/output terminal P1, the anti-parallel diodes of switching element 31p, DC capacitor 32, and input/output terminal P2.

As a result, there is a concern that, after time tx, DC capacitor 32 is charged and the voltage (a capacitor voltage Vc) of DC capacitor 32 is raised, proceeding from the rise of the voltage of the sound phase, as shown in Fig. 6. If this unduly raises the capacitor voltage Vc, DC capacitor 32 may be damaged.

In particular, if DC transmission line 14P is configured of a cable, the capacitance is large and the decay time constant of DC voltage Vdcp at the voltage waveform of Fig. 5 is therefore increased. Thus, depending on a wire length of the cable, DC voltage Vdcp may exhibit a behavior that the DC voltage Vdcp hardly decays from the voltage amplitude of the sound phase. In such a case, solving the problem of the overvoltage at the occurrence of a 1LG fault by arranging lightning arrestors for DC transmission lines 14P and 14N may require an enormous processing-energy withstand capacity from the lightning arrestors, which may lead to an increased size and an increased cost of the device.

### <Configuration of Impedance Switching Circuit>

Fig. 7 is a circuit diagram illustrating an example configuration of impedance switching circuit 50.

Referring to Fig. 7, impedance switching circuit 50 includes a core reactor 51, which is connected between the ground and neutral point 62 on the secondary side of transformer 13.

Fig. 8 shows a schematic diagram illustrating characteristics of core reactor 51 of Fig. 7. A current IL flowing through core reactor 51 is indicated on the horizontal axis of Fig. 8, and a voltage VL applied to core reactor 51 is indicated on the vertical axis of Fig. 8. Voltage VL corresponds to neutral-point voltage Vn at neutral point 62 on the secondary side of transformer 13. Although not shown, core reactor 51 is configured of a conductor (a coil) being wound about a core (a magnetic core) and functions as a magnetic reactor.

Core reactor 51 includes a nonsaturated region in which the current IL increases with an increase of voltage VL and a saturation region in which the magnetic flux of the core (the magnetic core) is saturated and the inductance, thereby, decreases. In the saturation region, the ratio of voltage VL to current IL (VL/IL), that is, the inductance decreases, and the impedance (ωL) at each frequency, thus, decreases to be lower than the nonsaturated region.

Core reactor 51 is designed to operate in the saturation region upon application of neutral-point voltage Vn (Vn = Vf1) at the occurrence of a 1LG fault and operate in the nonsaturated region upon application of neutral-point voltage Vn (Vn = Vnm) in normal operation where no 1LG fault occurs. Neutral voltage Vnm in normal operation is zero or the voltage upon application of the third-order harmonics described above, which is lower than Vf1 at the occurrence of a 1LG fault.

For example, the operating point of the magnetic saturation can be adjusted by the cross-sectional area and material of the magnetic core (not shown) of core reactor 51, turns of the coil (not shown), etc. In other words, core reactor 51 is designed so that the magnetic saturation occurs upon application of neutral-point voltage Vn = Vf1 and no magnetic saturation occurs upon application of neutral-point voltage Vn = Vnm.

This allows impedance switching circuit 50, connected between the ground and neutral point 62 on the secondary side of transformer 13, to be configured so that the impedance decreases upon occurrence of a 1LG fault, as compared to the normal operation where no 1LG fault occurs. Accordingly, the impedance of impedance switching circuit 50 for the voltage generated in response to the 1LG fault, that is, the voltage that is raided by the 1LG fault (e.g., the voltage having the system frequency) decreases to be lower than the impedance for the neutral-point voltage in normal operation (when no 1LG fault occurs). In normal operation, in contrast, impedance switching circuit 50 operates at a high impedance, thereby reducing the current (current IL of Fig. 7) flowing between neutral point 62 and the ground even if the third-order harmonics is applied to neutral point 62.

In the event of a 1LG fault, in contrast, impedance switching circuit 50 operates at a lower impedance than in normal operation, thereby increasing the current flowing through the ground from neutral point 62 to draw a fault current to the ground. This inhibits the voltage rise at neutral point 62, which also inhibits the rise of the voltages of the sound phases described with respect to Fig. 4.

In this manner, according to the electric power conversion system of the present embodiment, placing impedance switching circuit 50 can inhibit the rise of the voltages of the sound phases in the event of a 1LG fault on AC lines 64 on power converter 2 side of transformer 13 connected between AC system 12 and self-commutated power converter 2. As a result, the rise of DC voltage Vdcp on DC transmission line 14P described with respect to Fig. 5 can also be inhibited, thereby inhibiting the rise of the voltage of DC capacitor 32 in a respective sub module 7.

Furthermore, in Embodiment 1, using core reactor 51 implementing the switching characteristics between the saturation region/the nonsaturated region in response to neutral-point voltage Vn illustrated in Fig. 8, impedance switching circuit 50 can be simply configured, without requiring any active control mechanisms.

### Embodiment 2.

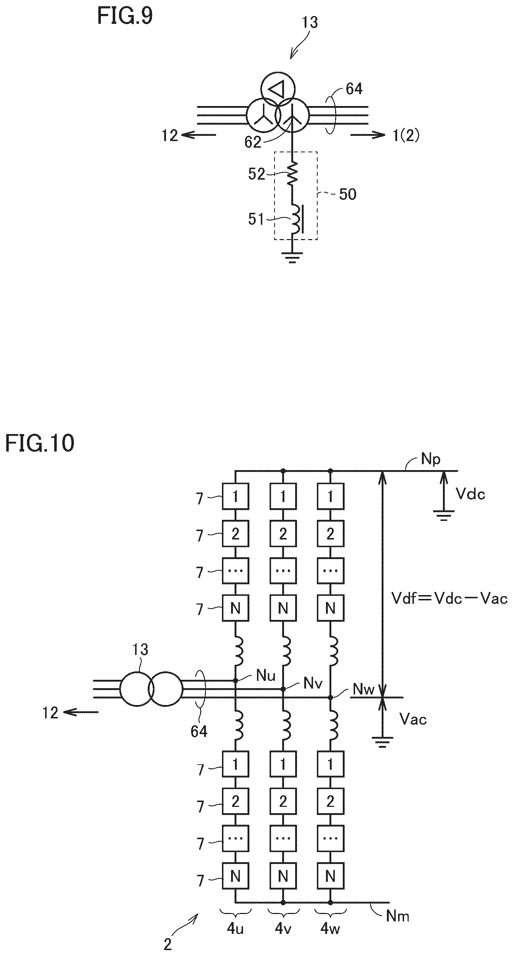

Fig. 9 is a circuit diagram illustrating a configuration of an impedance switching circuit according to Embodiment 2. In Embodiment 2, an impedance switching circuit 50 having the configuration of Fig. 9 is implemented in electric power conversion system 100 of Fig. 1.

Referring to Fig. 9, impedance switching circuit 50 according to Embodiment 2 further includes a current-limiting resistor 52 connected in series to a core reactor 51, in addition to the configuration according to Embodiment 1 (Fig. 7).

This can reduce, by current-limiting resistor 52, a fault current flowing through the ground from a neutral point 62 on the secondary side of a transformer 13 in the event of a 1LG fault in which core reactor 51 is saturated and impedance switching circuit 50 operates at a low impedance.

As a result, in Embodiment 2, the current withstand capacity required of core reactor 51 can be mitigated. Thus, the same advantageous effects as Embodiment 1 can be obtained by reducing the size and cost of core reactor 51.

### Variations of Embodiment.

In a variation of Embodiment 2, a design of an electrical resistance value R of current-limiting resistor 52 in the impedance switching circuit according to Embodiment 2 (Fig. 9) is described. Specifically, deriving of electrical resistance value R is described for preventing the capacitor voltage Vc described with respect to Fig. 5 from ending up experiencing overvoltage in the event of a 1LG fault.

Fig. 10 shows a schematic circuit diagram for illustrating voltages applied to the DC capacitors. Referring to Fig. 10, in each leg circuit 4, N (N: an integer greater than or equal to 2) sub modules 7 are connected in series between AC input terminals Nu, Nv, and Nw and a high-potential-side DC terminal Np connected to a DC transmission line 14P and between AC input terminals Nu, Nv, and Nw and a low-potential-side DC terminal Nn connected to a DC transmission line 14N.

Voltages Vu to Vw for the three phases of Fig. 4 are transmitted to AC input terminals Nu, Nv, and Nw, respectively. A voltage difference Vdf applied to the entirety of the N sub modules connected in series is expressed by Vdf = Vdc - Vac, where voltages Vu to Vw of Fig. 4 are collectively denoted as an AC voltage Vac and the voltage at high-potential-side DC terminal Np (DC transmission line 14P) or low-potential-side DC terminal Nn (DC transmission line 14N) is denoted as Vdc.

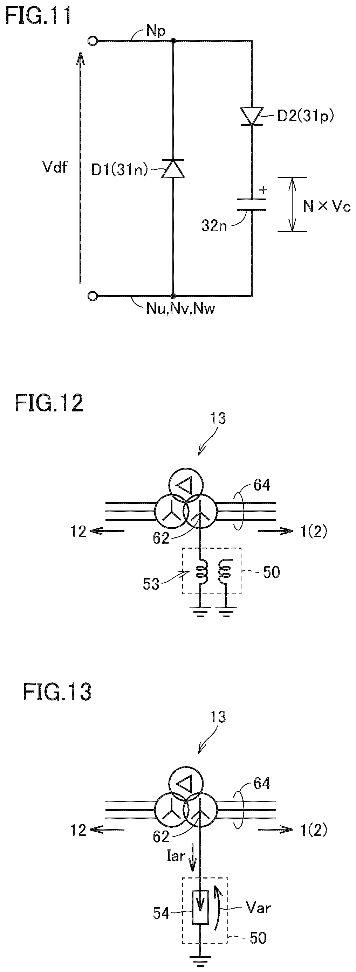

Fig. 11 is a simple equivalent circuit diagram of a respective arm of a power converter in the event of a 1LG fault. Fig. 11 shows an equivalent circuit between DC transmission line 14P and AC input terminals Nu, Nv, and Nw of each leg circuit 4.

As shown in Fig. 11, in the event of a 1LG fault, the protection function of a power converter 2 itself stops the operations of switching elements 31p and 31n in each sub module 7 illustrated in Fig. 3 and locks switching elements 31p and 31n to off. Due to this, a diode D1 configured of the anti-parallel diodes of switching element 31p; and a series body of a DC capacitor 32n and a diode D2 configured of the anti-parallel diodes of switching element 31p are connected in parallel between DC transmission line 14P and AC input terminals Nu, Nv, and Nw. DC capacitor 32n corresponds to N DC capacitors 32 of each sub module 7 being connected in series.

In the event of a 1LG fault, voltage difference Vdf shown in Fig. 10 is applied to N DC capacitors 32 connected in series in the equivalent circuit of Fig. 11. Due to this, if a rated voltage Vcap of each DC capacitor 32 is set to meet Vdf < N × Vcap, DC capacitor 32 can be prevented from experiencing overvoltage at the occurrence of a 1LG fault.

As shown in Fig. 10, Vdf = Vdc - Vac holds true, and Vac of the sound phase rises in the event of a 1LG fault. On this occasion, if an electrical resistance value R of current-limiting resistor 52 is reduced, a large amount of fault current flows through the ground from neutral point 62, thereby reducing the amount of voltage rise of Vac and diminishing voltage difference Vdf.

If electrical resistance value R of current-limiting resistor 52 is increased, conversely, the amount of fault current flowing through the ground from neutral point 62 decreases, increasing the amount of voltage rise of Vac and increasing voltage difference Vdf.

In this manner, depending on electrical resistance value R of current-limiting resistor 52, voltage difference Vdf varies, which is applied, in the event of a 1LG fault, to N DC capacitors 32 connected in series on the positive side or negative side of each leg circuit 4. Voltage difference Vdf can be determined by simulation or the like if the rating of electric power conversion system 100 is determined.

Accordingly, assuming that N × Vcap described above is a voltage limit Vlim (Vlim = N × Vcap), preferably, electrical resistance value R is set to a maximum value in a range where voltage difference Vdf, which varies in accordance with electrical resistance value R as a variable, meets Vif < Vlim. This can provide maximum inhibition of the fault current flowing through core reactor 51 in the event of a 1LG fault, without generating the overvoltage of DC capacitor 32.

In this manner, according to the variation of Embodiment 2, the current withstand capacity required of core reactor 51 can be mitigated as best as possible within a range where no overvoltage occurs at DC capacitor 32 in the event of a 1LG fault. As a result, the effects of the size and cost of core reactor 51 in Embodiment 2 can be maximized.

### Embodiment 3.

Fig. 12 is a circuit diagram illustrating a configuration of an impedance switching circuit according to Embodiment 3. In Embodiment 3, an impedance switching circuit 50 having the configuration of Fig. 12 is implemented in electric power conversion system 100 of Fig. 1.

Referring to Fig. 12, impedance switching circuit 50 according to Embodiment 3 includes a transformer 53. Transformer 53 is connected between a ground and a neutral point 62 on the secondary side of a transformer 13. Transformer 53, as is known, has the primary and secondary windings that are wound about the magnetic core. Specifically, the primary winding of transformer 53 is connected between neutral point 62 and the ground. This allows transformer 53 to function as a magnetic inductor and thus, yields the same advantages effects as core reactor 51 described above. Transformer 53 corresponds to one example of a "second transformer."

Similarly to Fig. 8, transformer 53 is designed to have magnetic characteristics so that magnetic saturation occurs when applied neutral-point voltage Vn = Vf1 at the occurrence of a 1LG fault, and no magnetic saturation occurs when applied neutral-point voltage Vn = Vnm in normal operation (when no 1LG fault occurs).

This lowers the impedance of transformer 53 operating in a saturation region in the event of a 1LG fault, thereby increasing the current flowing through the ground from neutral point 62 to draw a fault current to the ground. This inhibits the voltage rise at neutral point 62, which also inhibits the rise of the voltages of the sound phases described with respect to Fig. 4.

In normal operation where no 1LG fault occurs, in contrast, the impedance of transformer 53 operating in a nonsaturated region can inhibit the current flowing between neutral point 62 and the ground even if third-order harmonics is applied to neutral point 62.

As a result, in Embodiment 3, the same advantages effects as Embodiment 1 can be obtained by configuring impedance switching circuit 50 using transformer 53.

Note that Embodiment 3 may be combined with Embodiment 2 and current-limiting resistor 52 (Fig. 9) may further be connected in series to transformer 53 to configure impedance switching circuit 50. An electrical resistance value R of current-limiting resistor 52 on this occasion may be determined according to the variation of Embodiment 2. If a commercially-available voltage transformer which have a small current rating becomes applicable as transformer 53 in combination with current-limiting resistor 52, the cost can further be reduced.

### Embodiment 4.

Fig. 13 is a circuit diagram illustrating a configuration of an impedance switching circuit according to Embodiment 4. In Embodiment 4, an impedance switching circuit 50 having the configuration of Fig. 13 is implemented in electric power conversion system 100 of Fig. 1.

Referring to Fig. 13, impedance switching circuit 50 according to Embodiment 4 includes a lightning arrestor 54. Lightning arrestor 54 is connected between a ground and a neutral point 62 on the secondary side of a transformer 13.

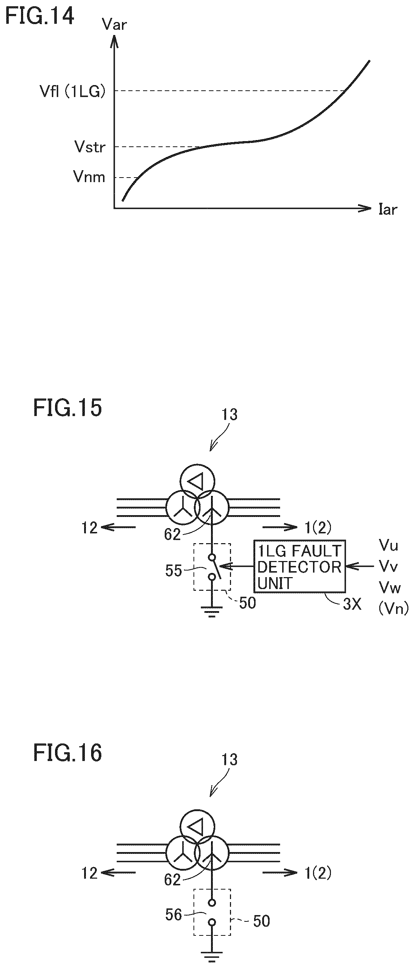

Fig. 14 shows a schematic diagram illustrating characteristics of lightning arrestor 54 of Fig. 13.

Referring to Fig. 14, as a voltage Var applied across lightning arrestor 54 increases to be greater than a turn-on voltage Vstr, a current Iar passing through lightning arrestor 54 increases abruptly. In a region where the applied voltage Var is less than turn-on voltage Vstr, current Iar is held low. In the configuration of Fig. 13, voltage Var applied to lightning arrestor 54 corresponds to a neutral-point voltage Vn.

In lightning arrestor 54, turn-on voltage Vstr is set so as to be less than neutral-point voltage Vn = Vf1 at the occurrence of a 1LG fault and greater than neutral-point voltage Vn = Vnm in normal operation (when no 1LG fault occurs).

As a result, lightning arrestor 54 operates at low impedance upon occurrence of a 1LG fault because current Iar increases abruptly, and operates at a high impedance in normal operation (when no 1LG fault occurs) because current Iar is very small. Accordingly, the functions of impedance switching circuit 50 described in Embodiment 1, etc. can be implemented even with the use of lightning arrestor 54.

As a result, in Embodiment 4, the same advantages effects as Embodiment 1 can be obtained by configuring impedance switching circuit 50 using lightning arrestor 54.

### Embodiment 5.

Fig. 15 is a circuit diagram illustrating a configuration of an impedance switching circuit according to Embodiment 5.

Referring to Fig. 15, an impedance switching circuit 50 according to Embodiment 4 includes a normally-off power-on switch 55. Power-on switch 55 is connected between a ground and a neutral point 62 on the secondary side of a transformer 13.

Power-on switch 55 is turned on or off according to a command from a 1LG fault detector unit 3X. While the impedance is, equivalently, infinite when power-on switch 55 is off and the impedance decreases equivalently to on-resistance.

If the voltage amplitude of any one phase increases to be greater than a determination value, 1LG fault detector unit 3X can detect the occurrence of the 1LG fault, for example, based on voltages Vu, Vv, and Vw of the three phases (Fig. 3) of AC lines 64. Alternatively, 1LG fault detector unit 3X can also detect the occurrence of the 1LG fault based on an increased neutral-point voltage Vn.

When 1LG fault detector unit 3X detects no 1LG fault, 1LG fault detector unit 3X keeps power-on switch 55 off, whereas once 1LG fault detector unit 3X detects a 1LG fault, 1LG fault detector unit 3X controls power-on switch 55 to be on. For example, the functions of 1LG fault detector unit 3X can be implemented as some of the functions of a controller 3 to which various voltage and current measurements are input.

Power-on switch 55 is on/off controlled according to commands from 1LG fault detector unit 3X, thereby operating at a low impedance upon occurrence of a 1LG fault, and operating at a high impedance in normal operation (when no 1LG fault occurs). Accordingly, the functions of impedance switching circuit 50 described in Embodiment 1, etc. can be implemented even with the use of power-on switch 55.

In this manner, in Embodiment 5, the same advantageous effects as Embodiment 1 can be obtained by configuring impedance switching circuit 50 using power-on switch 55 the turning on and off of which is controlled by 1LG fault detector unit 3X.

Note that the power-on switch 55 can be configured of a semiconductor switch having a semiconductor device, such as an insulated gate bipolar transistor (IGBT) applied thereto, or a mechanical switch such as a relay that opens and closes a mechanical contact. The use of the semiconductor device allows prompt formation of a path for the fault current between the ground and neutral point 62 on the secondary side of transformer 13 in the event of a 1LG fault.

As described with respective to Figs. 4 to 6, the overvoltage problem of DC capacitor 32 associated with the rise of the voltage of the sound phase in the event of a 1LG fault occurs in a cycle according to the system frequency. Accordingly, the initial AC peak (positive peak or negative peak) immediately after the occurrence of the 1LG fault can be addressed by placing the lightning arrestor on AC lines 64 or on DC transmission lines 14P and 14N and the subsequent occurrence of overvoltage can be prevented by turning power-on switch 55 on until the next AC peak arrives. In this case, power-on switch 55 can be configured of a mechanical switch that requires a littler over ten milliseconds to tens of milliseconds for the transition from off to on. This can reduce the energy withstand capacity of the lightning arrestor and obviates the need for rapid operation of power-on switch 55, thereby implementing the advantageous effects of Embodiment 5, without having to unduly increasing the specifications of the two.

### Embodiment 6.

Fig. 16 is a circuit diagram illustrating a configuration of an impedance switching circuit according to Embodiment 6. In Embodiment 6, an impedance switching circuit 50 having the configuration of Fig. 16 is implemented in electric power conversion system 100 of Fig. 1.

Referring to Fig. 16, impedance switching circuit 50 according to Embodiment 6 includes an air gap 56. Air gap 56 is connected between the ground and a neutral point 62 on the secondary side of transformer 13.

Air gap 56 is configured to flash-over when the voltage applied to a cap, formed between electrodes, exceeds a predetermined design voltage, and a current-carrying path is thereby formed. The voltage applied to the gap corresponds to a neutral voltage-point Vn. Accordingly, the specifications (e.g., shape and material of electrodes or the gap distance) of air gap 56 are selected so that flashover occurs when applied neutral-point voltage Vn = Vf1 at the occurrence of a 1LG fault and no flashover occurs when applied neutral-point voltage Vn = Vnm in normal operation (when no 1LG fault occurs).

As a result, air gap 56 operates at a low impedance upon occurrence of a 1LG fault, due to the current-carrying path formed by the occurrence of the flashover, and operates at a high impedance in normal operation (when no 1LG fault occurs) in which no current-carrying path is formed. Accordingly, the functions of impedance switching circuit 50 described in Embodiment 1, etc. can be implemented even with the use of air gap 56.

As a result, in Embodiment 6, the same advantages effects as Embodiment 1 can be obtained by configuring impedance switching circuit 50 using air gap 56.

### Embodiment 7.

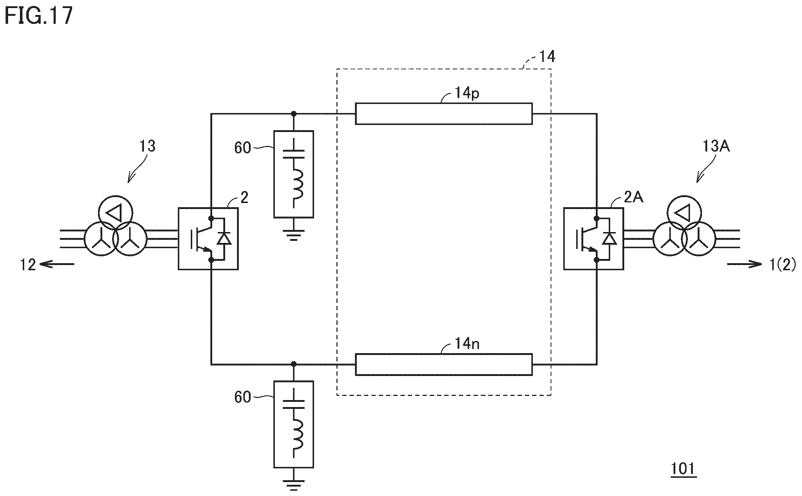

Fig. 17 is a schematic configuration diagram of an electric power conversion system 101 according to Embodiment 7.

Referring to Fig. 17, an electric power conversion system 101 according to Embodiment 7, as compared to electric power conversion system 100 of Fig. 1, includes a filter circuit 60, instead of impedance switching circuit 50. Filter circuit 60 is disposed between a DC transmission line 14P and the ground and between the ground and a DC transmission line 14N.

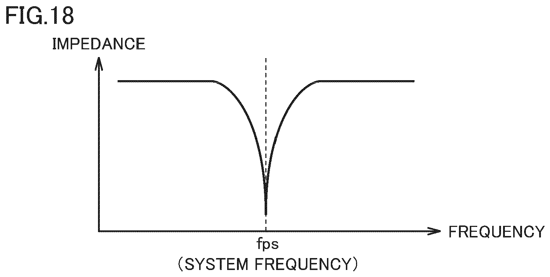

Fig. 18 is a schematic diagram illustrating frequency characteristics of the filter circuit of Fig. 17.

As shown in Fig. 18, filter circuit 60 has a low impedance for a system frequency fps and electrically connects between DC transmission lines 14P and 14N and the ground. In other words, filter circuit 60 is configured to pass a frequency component of system frequency fps therethrough.

Meanwhile, filter circuit 60 has a high impedance for frequencies, other than system frequency fps, and electrically connects between DC transmission lines 14P and 14N and the ground. In other words, filter circuit 60 is configured to block frequency components, other than that of system frequency fps.

As described with respect to Figs. 4 and 5, overvoltage caused by the occurrence of a 1LG fault is voltage fluctuations of the system frequency component. Due to this, the fault current caused by 1LG fault can be drawn to the ground by connecting filter circuit 60, for passing the system frequency component therethrough, between DC transmission lines 14P and 14N and the ground. This can inhibit the rise of the voltage of the sound phase and the rise of the voltages of DC transmission lines 14P and 14N.

When no 1LG fault occurs (in normal operation), in contrast, the third-order harmonic voltage is applied to the AC voltages of the respective phases, but filter circuit 60 is configured to have frequency characteristics that pass only the component of system frequency fps, blocking the other components, as shown in Fig. 18, thereby causing no impact on the operation of the electric power conversion system 101 in normal operation.

As a result, similarly to Embodiment 1, etc., the electric power conversion system according to Embodiment 7 can inhibit the rise of the voltages of DC transmission lines 14P and 14N and the rise of the voltage of the sound phase in the event of an 1LG fault on AC lines 64 on the power converter side of a transformer 13 connected between an AC system 12 and a self-commutated power converter 2. As a result, the rise of the voltage of DC capacitor 32 in each sub module 7 can be inhibited.

Moreover, unlike Embodiments 1 to 6, a circuit is placed for a DC system 14 (DC transmission lines 14P and 14N) in Embodiment 7. Thus, Embodiment 7 is applicable to an electric power conversion system that has some constrains to the placement of equipment to a neutral point 62 of transformer 13 (e.g., constrains concerning the connection of the transformer or siting constrains of AC yard, etc.).

Note that Embodiments 1 to 6 may be combined with Embodiment 7 to configure an electric power conversion system including impedance switching circuit 50 according to Embodiments 1 to 6 and filter circuit 60 placed on DC transmission lines 14P and 14N.

For confirmation purpose, the configurations described in the respective embodiments described above, including combinations not mentioned in the specification, are intended to be combined as appropriate in the present application as originally filed to an extent that causes no inconsistency or conflict.

The presently disclosed embodiments should be considered illustrative in all aspects and do not limit the present disclosure. The scope of the present disclosure is defined by the appended claims, rather than by the above description. All changes which come within the meaning and range of equivalency of the appended claims are intended to be embraced within their scope.

### REFERENCE SIGNS LIST

1, 1A power conversion device; 2, 2A power converter; 3, 3A controller; 3X detector unit; 4u, 4v, 4w leg circuit; 5, 6 arm; 7 sub module; 8A, 8B reactor; 12, 12A AC system; 13, 13A transformer (first transformer); 13X winding (for control power source); 14 DC system; 14N, 14P DC transmission line; 16 AC current detector; 31n, 31p switching element; 32, 32n power storage element (DC capacitor); 33 voltage detector; 50 impedance switching circuit; 51 core reactor; 52 current-limiting resistor; 53 transformer (second transformer); 54 lightning arrestor; 55 power-on switch; 56 air gap; 60 filter circuit; 62, 62A neutral point; 64, 64A AC line; 100, 101 electric power conversion system; D1, D2 diode; Nu, Nv, Nw AC input terminal; P1, P2 input/output terminal (sub module); Vc capacitor voltage; Vn neutral-point voltage; Vstr turn-on voltage (lightning arrestor); and fps system frequency.

## Claims

1. An electric power conversion system comprising:
a self-commutated power converter to perform power conversion between a three-phase alternating-current system and a direct-current system;
a first transformer having a primary side connected to the alternating-current system and a secondary side connected to the self-commutated power converter, the secondary side having a Y-connection; and
an impedance switching circuit electrically connected between a neutral point of the Y-connection of the first transformer and a ground, wherein
when a single-line-to-ground fault occurs on three phase alternating-current lines connecting the first transformer and the self-commutated power converter, the impedance switching circuit is configured to have a reduced impedance, as compared to when the single-line-to-ground fault does not occur.

2. The electric power conversion system according to claim 1, wherein
the impedance switching circuit includes a magnetic inductor configured of a core reactor electrically connected between the neutral point and the ground, and
when a voltage, generated at the neutral point upon occurrence of the single-line-to-ground fault, is applied to the core reactor, the core reactor is configured to cause magnetic saturation, and when a voltage, generated at the neutral point when the single-line-to-ground fault does not occur, is applied to the core reactor, the core reactor is configured to cause no magnetic saturation.

3. The electric power conversion system according to claim 1, wherein
the impedance switching circuit includes a magnetic inductor configured of a second transformer including a primary winding or a secondary winding electrically connected between the neutral point and the ground, and
when a voltage, generated at the neutral point upon occurrence of the single-line-to-ground fault, is applied to the second transformer, the second transformer is configured to cause magnetic saturation, and when a voltage, generated at the neutral point when the single-line-to-ground fault does not occur, is applied to the second transformer, the second transformer is configured to cause no magnetic saturation.

4. The electric power conversion system according to claim 2 or 3, wherein
the impedance switching circuit further includes a current-limiting resistor connected in series to the magnetic inductor between the neutral point and the ground.

5. The electric power conversion system according to claim 4, wherein
the self-commutated power converter is a modular multilevel power conversion including a plurality of sub modules which are electrically connected in series between a direct-current power distribution line of a direct-current system and respective phases of the three phase alternating-current lines connecting the first transformer and the self-commutated power converter,
the plurality of sub modules each include a direct-current capacitor,
upon occurrence of the single-line-to-ground fault, a voltage difference between the direct-current power distribution line and an alternating-current line of a sound phase at which a ground fault does not occur, among the three phase alternating-current lines, increases with an increase of an electrical resistance value of the current-limiting resistor, and
the electrical resistance value is set to a maximum value within a range achieving the voltage difference preventing the direct-current capacitor of each of the plurality of sub modules from experiencing overvoltage upon occurrence of a single-line-to-ground fault.

6. The electric power conversion system according to claim 1, wherein
the impedance switching circuit includes a lightning arrestor connected between the neutral point and the ground, and
a turn-on voltage for the lightning arrestor is lower than a voltage that develops at the neutral point upon occurrence of the single-line-to-ground fault, and lower than a voltage that develops at the neutral point when the single-line-to-ground fault does not occur.

7. The electric power conversion system according to claim 1, further comprising
a detector unit to detect occurrence of the single-line-to-ground fault, wherein
the impedance switching circuit includes a switch connected between the neutral point and the ground, and
the switch is kept off in a time period in which occurrence of the single-line-to-ground fault is not detected by the detector unit, and turns on upon detection of occurrence of the single-line-to-ground fault by the detector unit.

8. The electric power conversion system according to claim 1, wherein
the impedance switching circuit includes an air gap formed between the neutral point and the ground, and
the air gap is configured to cause flashover when applied a voltage developed at the neutral point upon occurrence of the single-line-to-ground fault, and cause no flashover when applied a voltage developed at the neutral point when the single-line-to-ground fault does not occur.

9. The electric power conversion system according to any one of claims 1 to 8, further comprising
a filter circuit connected between the ground and each of a first direct-current transmission line and a second direct-current transmission line, the first direct-current transmission line and the second direct-current transmission line constituting the direct-current system, wherein
the filter circuit is configured to pass a system frequency component of the alternating-current system.

10. An electric power conversion system, comprising:
a self-commutated power converter to perform power conversion between a three-phase alternating-current system and a direct-current system;
a transformer connected between the alternating-current system and the self-commutated power converter;
three phase alternating-current lines connecting between the transformer and the self-commutated power converter, and
a filter circuit connected between the ground and each of a first direct-current transmission line and a second direct-current transmission line, the first direct-current transmission line and the second direct-current transmission line constituting the direct-current system, wherein
the filter circuit is configured to pass a system frequency component of the alternating-current system.

11. The electric power conversion system according to claim 9 or 10, wherein
the filter circuit is configured to have frequency characteristics that block a component of a frequency, other than the system frequency of the alternating-current system.
